# EUROPEAN PATENT APPLICATION

(11) **EP 2 159 624 A1**
(43) Date of publication of application: **03.03.2010**
(21) Application number: 09014168.0
(22) Date of filing: 26.04.2007
(51) Int. Cl.: G02C 11/00

(54) **Anti-theft device for eyeglasses**

(30) Priority: 05.05.2006 IT MI20060890
(62) Divisional of application: 07008539.4
(71) Applicant: PLASTI-MAX SpA, 24064 Grumello Del Monte BG (IT)
(72) Inventor: Mazzucchelli, Corrado, 24064 Grumello del Monte(BG) (IT)
(74) Representative: Trupiano, Federica

(57) **Abstract**

The present invention concerns an antitheft device for glasses. The device comprises a body that can be fixed to an arm of a pair of glasses and is equipped with a stop surface for making contact against the lens of the same pair of glasses. Advantageously, the stop surface is movable with respect to the body of the device for being brought into contact with the lens at a subsequent time from that of the fastening of the device on the arm.

## Description

The present invention concerns an antitheft device for glasses, and in particular concerns an antitheft device for glasses on public display.

For some time now, various antitheft devices have been available for application to glasses on public display, devices that even though limiting the possibilities of shoplifting, still allow potential customers to try the glasses.

Recently, antitheft devices comprising a body that can be locked onto one of the two arms of a pair of glasses, close to the associated hinge, have established themselves on the market. The body can be formed in single piece, or be comprised of two portions that can be coupled together, The device is equipped with a distal end that, in the phase of mounting the antitheft device on the associated pair of glasses, and before its fixing, is brought into contact with a lens. In this configuration, the arm on which the device is locked cannot be folded towards the lens, in the closed position. In other words, the arm on which the antitheft device is operative remains in the open position, making theft of the glasses difficult, which are more difficult to hide. The shape of the device is such as to allow a potential customer to wear the glasses for trying them out. The body of the antitheft device remains interposed between the wearer's temple and the arm of the glasses.

Antitheft devices are often associated with different electronic devices such as, for example, bar codes, RFID (Radio Frequency Identity) tags, magnetic inserts, etc., which can be detected by specially provided readers installed at the entrances to the areas where the glasses are displayed. These electronic devices constitute a further deterrent against theft of the glasses.

European patent application EP-A-0225255, in the name of Hennert, describes a traditional antitheft device for glasses. The device comprises a body that can be screws onto an arm of a pair of glasses. In particular, during application of the device, the open arm can be inserted in a sliding manner in a specially provided groove made on the body of the device. A distal end of the device is provided with a stop surface that is brought into contact with the lens of the glasses. In this configuration, the device is in the operating position, next to the hinge, and is blocked on the arm by means of a screw. The device cannot be moved with respect to the arm without first disengaging the fixing screw. The hinge of the arm cannot be rotated.

European patent application EP-A-1041423, in the name of Applicant, describes an antitheft device similar to the previous one, but provided with gasket having the function of preventing the device from scratching or scraping the lens of the glasses and the arm on which it is applied.

Antitheft devices can be applied to the glasses at any time. Usually, these devices are applied by the retailer of the glasses, before displaying them to the public. However, this operation requires a significant amount of time, especially if there are a large number of glasses to be fitted out, and must be carried out with care, to avoid damaging the glasses. The same reseller takes care of separating the device from the associated glasses when they are purchased by a customer by releasing the fixing screw or the equivalent fixing systems provided by the device.

In recent times, demand from retailers has grown for antitheft devices applied to glasses directly by the manufacturer or by the distributor of the glasses. In other words, the market has recently turned towards a different solution that provides for the shipping of glasses from the manufacturer, or from the distributor, to the retailer with the antitheft devices already applied to an arm. The glasses are transported with one of the two arms in the open position (the arm equipped with the associated antitheft device), with evident disadvantages with regards to the space occupied and packing requirements.

One of the main drawbacks is due to the fact that the delivering of glasses equipped with traditional antitheft devices is not easy and, according to estimates regarding the European market, involves an increase in costs of approximately 20% with respect to the associated transport costs of the same glasses in the closed configuration, that is to say with both arms folded. In addition, during transport the glasses with an arm blocked in the open position can more easily suffer damage with respect to glasses transported in the closed configuration. For these motives, the need has been felt for some time to have antitheft devices for glasses that allow easy and straightforward transport/handling of the glasses before their display or sale to the public.

Another drawback is given by the need to equip traditional antitheft devices with gasket having the function of protecting the glasses against damage that could be caused by the fixing screw, or distal end.

One object of the present invention is that of making available an antitheft device for glasses that resolves the drawbacks of traditional devices in a simple and effective manner.

A further object of the present invention is that of providing an antitheft device for glasses that can be applied with extreme ease to glasses prior to transport and which at the same time allows the space occupied by the glasses to be minimized.

Another object of the present invention is that of providing an antitheft device for glasses that is simple to use, even for personnel with little experience.

Yet another object of the present invention is that of making available an antitheft device for glasses that allows the risks of damage to be kept to a minimum, both during transportation and when the glasses are displayed to the public.

These and other objects are achieved by the present invention, which concerns an antitheft device for glasses comprising a body that can be fixed to an arm of a pair of glasses and provided with a stop surface for making contact with a lens of the same pair of glasses, characterized in that said stop surface is movable with respect to said body for being brought into contact with said lens at a time following that of the fixing of said body on the arm.

The antitheft device according to the present invention can be fixed to a pair of glasses, directly by the manufacturer or by the distributor for example, with the body of the device in a position that allows the closure of the associated arm. In this way, packing and transport of the glasses becomes straightforward, practical and inexpensive. The retailer who receives the glasses already fitted with the device of the invention simply turns the arm to the open position and, by moving the device's stop surface towards the corresponding lens, takes care of setting up the device itself, or rather of rendering it operative.

The stop surface is only movable in a first direction, with respect to the body of the device, that is to say towards to lens next to the arm on which the body of the device is fixed.

Alternatively, the stop surface is also movable (preferably via the unlocking action produced by a special tool or key) in the opposite direction to the first one, to allow the closure the arm and thus of the glasses, when necessary.

The body of the device can be fixed to the arm in a position that allows the opening and closing of the same arm, or rather a rearward position with respect to the hinge. In this first configuration, the antitheft device is not operative.

To operate the device it is sufficient to bring the arm into the open position and act on the stop surface to push it into contact with the lens of the glasses. In this second configuration, the device is operative, the stop surface cannot be separated from the lens against which it rests and closure of the arm is prevented.

Preferably, the stop surface belongs to a tongue of the device, a tongue constrained in a movable manner to the body. The tongue can only slide towards the lens of the glasses, in a specially provided guide made in the body of the device. For example, the guide extends parallel to the arm of the glasses to which the body of the device if fixed.

The tongue is provided with means to engage the associated guide with unidirectional movement in one or more predefined positions.

Preferably, the guide is provided with at least one serrated surface that can engage with a pawl element of the tongue. For example, the tongue is provided with flexible flaps that slide on the teeth of the guide when the tongue moves in the allowed direction and which engage with these teeth when the tongue is pushed in the opposite direction, i.e. the prohibited direction, effectively blocking the movement of the tongue itself. Alternatively, a sawtooth-shaped surface could be provided on the tongue and the pawl element on the body of the device, in correspondence to the guide.

The retailer of the glasses can activate the device very rapidly and with great simplicity. The tongue can be brought into contact against the lens of the glasses by simply pushing the tongue itself by hand. To avoid damaging the lens, the tongue or its stop surface can be made of a non-scratch material or can be covered in a rubber sheath, etc.

According to the preferred embodiment of the present invention, the tongue has an arched profile to follow the shape of the majority of glasses on sale, especially the shape of the lens against which it will make contact. In other words, the tongue is curved in correspondence to the stop surface to maximize the contact area with the lens and to avoid possible contact with the hinge located between the arm and the lens. In practice, when the antitheft device is operative, for the most part the tongue extends parallel to the arm of the glasses and the stop surface is curved towards the central portion of the lens.

The centre of the tongue can be provided with a groove, or a slot or an opening, for the sliding housing, with clearance, of the hinge of the arm, independently of the size of the hinge. This groove allows contact between the tongue and the hinge of the glasses to be avoided and therefore avoids the possibility of the hinge being damaged by contact with the tongue pushed towards to lens.

When the glasses are sold, the retailer releases the device from the arm with a specially provided tool or key.

The body of the device can be screwed onto an arm of the glasses, as envisaged with traditional devices. Alternatively, the body of the device can be formed by two halves that can be fixed on the arm and coupled together by a joint.

Preferably, the system of fixing the device to the glasses comprises at least one screw that can be tightened against a portion of a pair of glasses, and is characterized in that said screw comprises a first threaded portion accessible with a tool for screwing, and a second portion constrained to the first portion in a rotatable manner and destined to make contact with said glasses.

In other words, the body of the device can be screwed onto an arm of the glasses and the screw has the above-described structure. The body of the device has a bridge structure and the arm can be inserted in its inner space. The screw engages a specially provided hole made in the top portion of the bridge, coming into contact on the arm of the glasses and compressing it against the lower surface of the body of the device, beneath the bridge portion.

The screw is composed of at least two portions, a first threaded portion that can be screwed into the specially provided hole in the body of the device, and a second non-threaded portion constrained to the first portion in a rotatable manner and able to compress the arm of the glasses. For example, the second portion is pivoted on the first portion, in correspondence to its base, so that it remains inserted between the arm of the glasses and the first portion.

Preferably, the second portion is a gasket made of a sufficiently elastic material so as not to damage the arm when the screw is tightened onto it.

When the first portion of the screw is screwed into the body of the device and the second portion makes contact with the arm of the glasses, the same second portion, in an elastic material, adapts itself to the profile of the arm. Rotation of the second portion of the screw is prevented by the frictional force that is generated with the surface of the arm. By further screwing of the first portion of the screw, the arm is clamped in the body of the device, without risk of damage to the glasses.

The tool used for screwing is a mechanical key that engages with the upper surface of the screw with a matching shape. For example, three projections arranged at 120° are present on the upper surface of the screw and the mechanical key is provided with three notches, complementary to the projections and fitting onto them. The mechanical key is supplied to the retailer of the glasses, who will take care of unscrewing the device from the associated arm at the time of sale.

The device according to the present invention is associable with different electronic anti-shoplifting devices such as, for example, magnetic elements, RFID tags, etc. These electronic devices can be constrained to the body of the antitheft device, or directly to an arm of the glasses by means of the invention's fastening system, so as to be visible and in this way act as a further deterrent against theft of the glasses.

The device according to the present invention allows the glasses to be handled with extreme simplicity and economy of space. The device is applied to an arm of a pair of glasses directly by the manufacturer, in a non-operative configuration, but useful for the transport of the same glasses with both arms closed. The device can be set to its operative configuration at a later time with great ease, without having to act on the fastening system of the body of the device to the arm. This operation can be performed by sales staff for the glasses in the display areas by simply opening the arm fitted with the device and pushing the tongue up against the lens of the glasses. The travel of the tongue, that is to say the distance that the tongue can cover starting from its initial position, is preset to allow the operator to bring the stop surface into contact with the lens of the glasses, independently of their shape. By pushing the tongue towards the lens of the glasses, or rather extracting the tongue from the body of the antitheft device, the operator is able to adjust the travel of the tongue and the distance of the stop surface from the lens, or the pressure that this surface exerts on the lens.

The stop surface of the tongue is made of, or covered with, a suitable material to avoid damage to the glasses. The fastening screw is also made in a manner to avoid scratches or scrapes on the arm to which it is clamped. The second portion of the screw, the gasket, prevents the first portion from scratching the glasses by turning on the associated surface.

Further aspects and advantages of the present invention will become clearer from the description that follows, made by way of non-limitative example, with reference to the attached schematic drawings, where:
- Figure 1 is a perspective rear view of an antitheft device according to the present invention,
- Figure 2 is a perspective front view of the device shown in Figure 1,
- Figure 3 is a longitudinal cross-sectional view of the device shown in Figure 1,
- Figure 4 is a perspective view of a detail of the device shown in Figure 1,
- Figure 5 is a front view of the device shown in Figure 1,
- Figure 6 is a transverse cross-sectional view of the device shown in Figure 1 mounted on a pair of glasses,
- Figure 7 is a perspective view of the device shown in Figure 6,
- Figure 8 is a perspective view of the device shown in Figure 6,
- Figure 9 is a perspective view of a detail of the device shown in Figure 1,
- Figure 10 is a transverse cross-sectional view of a detail shown in Figure 9, and
- Figure 11 is a perspective view from above of the detail shown in Figure 9.

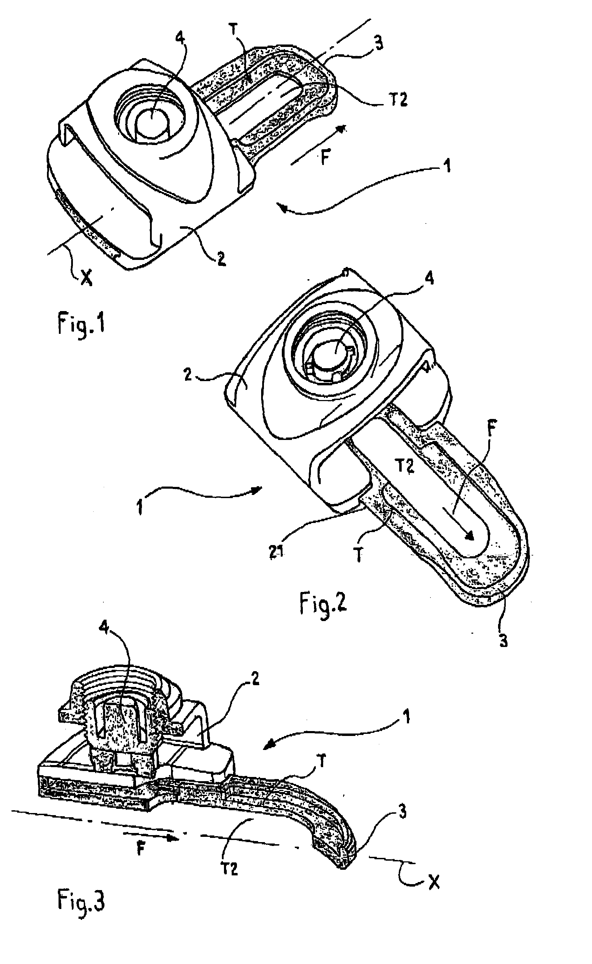

With reference to Figures 1-3, an antitheft device 1 for glasses according to the present invention is shown, comprising a body 2, which can be fastened in a non-permanent manner to one of the two arms of a pair of glasses, and a surface 3, having the function of moving into contact with the lens of the glasses.

In antitheft devices according to known art, the stop surface 3 is fixed with respect to the body 2. Usually, as described in EP-A-0225255 for example, this stop surface 3 is a portion of the body 2, i.e. it is made with it as a single piece. According to known art, the body 2 is pushed against the lens of the glasses during the assembly phase of the device on the arm.

Advantageously, the stop surface 3 in the device 1 according to the present invention is movable with respect to the body 2 fixed to a pair of glasses.

The body 2 of the device is provided with means of fastening 4 to an arm of a pair of glasses, preferably a screw 4. The stop surface 3 can slide with respect to the body 2 in a first direction X. In particular, the stop surface 3 can be moved in the direction of the arrow F, to distance it from the body 2.

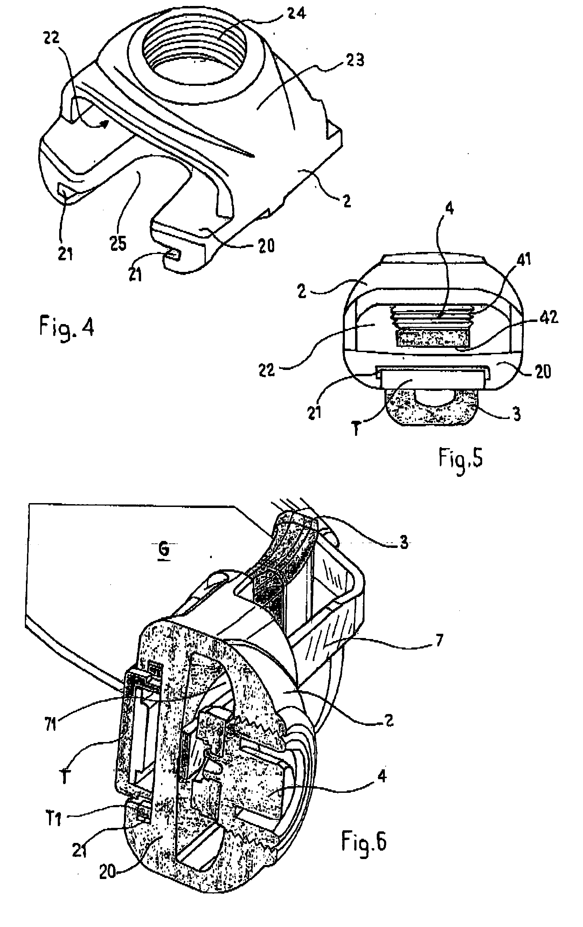

According to the preferred embodiment of the present invention, the stop surface 3 belongs to a tongue T constrained to the body 2, sliding in a unidirectional manner on a specially provided guide 21. Figure 4 shows the body 2 of the device in detail.

The body 2 comprises a bridge portion 23 that overhangs a base 20, leaving a space 22 for the insertion of an arm of the glasses. The guide 21 for the tongue T is provided in correspondence to the base 20, as shown in Figures 4 and 5. A threaded hole 24 is provided on the bridge portion for engaging the screw 4 (Figure 5).

The screw 4 is shown completely screwed into the body 2 in Figure 5, that is to say with lower portion in contact with the base 20. When the device 1 is mounted on a pair of glasses, the arm is compressed between the screw 4 and the base 20.

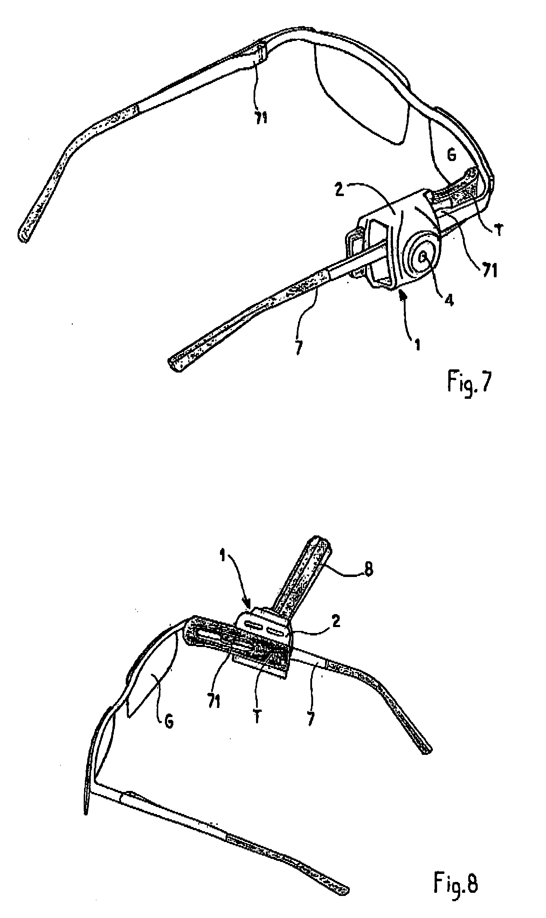

Figure 6 shows a transversal cross-section of the device 1 mounted on the right arm 7 of a pair of glasses. The right lens of the same glasses is indicated by reference letter G. The body 2 is stably fastened to the arm 7, which remains clamped between the screw 4 and the base 20. In practice, the arm 7, in the open position, is inserted in the space 22 of the body 2, up to when the same body 2 finds itself next to the hinge 71, and the screw 4 is subsequently screwed in to block the body 2 in this position. Figures 7 and 8 show the device 1 in its operative position.

With the tongue T in its initial position, the body 2 of the device can be retracted from the arm 7, shown in Figures 1-3. In this configuration, the device 1 does not block the folding of the arm 7. In other words, the device 1 is not operative with the tongue T retracted, but allows the opening/closure of the arm 7, with evident advantages with regards to the simplicity and inexpensiveness of packing and shipping the glasses.

The operation of blocking the non-operative device 1 on the arm 7 can be carried out by the manufacturer of the glasses, for example, in the factory during production.

The device 1 can be rendered operative at any time by simply acting on the tongue T and moving it towards the lens G, that is to say by bringing the tongue T to its final extracted position, shown in Figures 6-8. In this second position, the tongue T is touching the lens G in correspondence to the surface 3 and the arm 7 cannot be folded for closure.

The tongue T is only movable in the direction of the arrow F. In practice, the tongue T engages the guide 21 of the device 1 via a unidirectional coupling, for example, with ratchet mechanisms, etc.

The guide 21 of the body 2 is toothed, or rather at least one surface in contact with the tongue T is provided with a plurality of teeth. The tongue T is provided with elements for engaging said teeth just in the direction F. In this way, movement of the tongue T with respect to the body 2 is made irreversible and, once moved to its second position, the tongue T remains fixed, rendering the device 1 operative.

With reference to Figure 6, the tongue T is provided with flexible flaps T1. When the tongue T is pushed towards the lens G, the flaps T1 slide freely over the teeth of the guide 21. Conversely, a movement of the tongue T in the opposite direction causes the flaps T1 to engage the cavity between two adjacent teeth of the guide 21, and the tongue T becomes blocked. Alternatively, the tongue T can be equipped with toothed surfaces and the guide 21 equipped with flexible flaps for unidirectional engagement with these surfaces.

It will be clear to an expert in this field that the device 1 can be provided with other couplings between the tongue T and the body 2. What is important is that the same tongue T can only move towards the lens G, and not in the opposite direction.

Alternatively, the tongue can be devoid of engagement flaps or ratchet mechanisms, in this way allowing a movement to be achieved that is no longer unidirectional towards the lens, but bidirectional in the two directions.

According to another preferred embodiment, the tongue T can be made in way to provide the release of the flexible flaps or ratchet mechanisms by means of suitable tool or key, in cases where bidirectional movement becomes necessary.

The teeth of the guide 21 can be such as to allow an almost continual movement of the tongue T and a large number of stop positions, or a jerky movement of the tongue T and a limited number of predefined positions.

The operation of rendering the device 1 operative, by moving the tongue T to its second position, can easily be carried out by the retailer of the glasses. The device 1 is also easily used by sales staff in areas where the glasses are displayed.

The travel of the tongue T, that is to say the distance that takes it from the first to the second position, is variable in order to allow the device to be compatible with glasses G having different shapes. In other words, the person who operates the tongue T can decide whether to completely extract the tongue, bringing into contact against the lens G, and with what pressure, or to only partially extract the tongue T, moving it to a minimum distance from the lens G, in this way allowing a minimum folding of the arm 7 around the hinge 71.

The device 1 can be separated from the arm 7 by acting on the screw 4. Figure 8 shows a tool for screwing 8, or rather a mechanical key, suitable for engaging the screw 4. The mechanical key 8 is supplied to the retailer of the glasses. When the glasses are purchased by a customer, the retailer unscrews the screw 4, separating the device 1 from the arm 7.

As shown in Figures 3, 6 and 7, the tongue T is curved to maintain at least a partial distance from the hinge 71 when the device 1 is operative. With particular reference to Figure 6, the distal end of the tongue T, that is to say the extremity with the stop surface 3, is curved towards the centre of the lens G. This characteristic also allows the device 1 to be mounted on glasses equipped with bulky hinges 71 or ones that particularly protrude from the arm 7 or the frame of the glasses.

As shown in Figures 1-4, the tongue T can be provided with a slot T2 able to house the hinge 71 with clearance and in a sliding manner.

When the tongue T is pushed against the lens G, the hinge 71 does not make contact with it. In this way, the risk of scratching the glasses in correspondence to the hinge 71 is avoided.

The device 1 can be associated with different electronic antitheft devices. For example, the device 1 can be associated with magnetic labels or provided with RFID tags, or it can be associated with a bar code, magnetic device, etc. These electronic (or optical) devices cooperate with the device 1 as a deterrent against theft of the glasses.

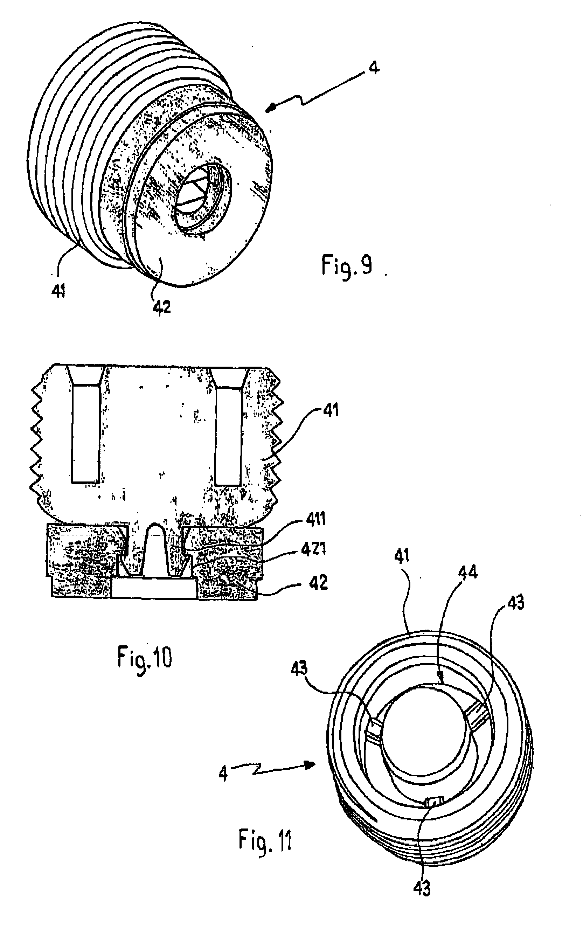

Figure 9 shows the screw 4 in perspective; it can be used to fasten the device 1 to the arm 7, or to fasten other objects to the glasses.

The screw 4 comprises at least a first threaded portion 41 that can be engaged in the hole 24 provided on the top of the bridge 23 of the body 2, and at least a second non-threaded portion 42, constrained to the first portion 41 in a rotatable manner.

The second portion 42 has the function of separating the arm 7 of the glasses from the first portion 41 of the screw 4. The second portion 42 is made of non-scratch material to avoid possible damage to the arm 7 when screwing the screw 4 into the body 2 of the device 1.

Preferably, the second portion 42 is a gasket that is pivoted on the first portion 41. For example, the first portion 41 can be made of a hard plastic (Teflon, ABS, PVC, etc.) and the second portion 42 made of silicone.

Figure 10 shows a possible coupling between the second portion 42 and the first portion 41. The first portion 41 is provided with a fungiform protuberance 411 that engages as a pivot in a cavity 421 of the second portion. For example, the protuberance 411 can be snap fitted into the cavity 421.

When the screw 4 is tightened against the arm 7 of the glasses, as shown in Figure 6, the gasket 42 remains inserted between the same arm 7 and the first portion. The gasket 42 at least partially adapts to the shape of the arm 7. The friction that is generated between the gasket 42 and the arm 7 prevents the gasket 42 from turning when the first portion 41 is turned with the tool 8. In this way, the screw 4, although allowing correct fastening on the arm 7, does not damage the surfaces of the glasses.

Figure 11 shows the portion of the head of the screw 4 in detail, that is to say the upper surface of the first portion 41. Preferably, as shown in this figure, the screw 4 is provided with three projections 43 arranged at 120° in a cavity 44. The tool 8 is provided with three notches complementary to the projections 43 and can be fitted onto them. In other words, the tool 8, a special mechanical key, is at least partially insertable in the cavity 44 and its shape matches the projections 43.

It is evident that the screw 4 can be used in systems of fastening objects to the glasses, for example, antitheft devices, tags, etc.

The device 1 has several advantages with respect to traditional antitheft devices for glasses. Initially, it can be set as non-operative on the glasses to facilitate transportation, and can be rendered operative at any time by acting on the tongue T, for example, when the glasses must be put on public display.

The tongue T is made of, or covered with, a non-scratch material to avoid damage to the glasses. Furthermore, the same tongue can be curved and can have a central slot to avoid contact with the hinge 71 of the arm 7 on which the device 1 is fixed.

The travel of the tongue T can be adjusted by the operator to follow the various shapes of the glasses on sale.

The fastening system comprises a screw 4 equipped with non-scratch gasket 42. The gasket 42 is mounted in a rotatable manner on the body 41 of the screw 4.

## Claims

1. A system for fastening objects to glasses, of the type including at least one screw (4) that can be tightened against a portion (7) of a pair of glasses, **characterized in that** said screw comprises a first threaded portion (41) accessible with a tool (8) for screwing, and a second portion (42) constrained to the first portion (41) in a rotatable manner and to make contact with said glasses.

2. Fastening system according to claim 1, **characterized in that** said second portion (42) is a gasket made of an elastic material.

3. Fastening system according to claim 1 or claim 2, **characterized in that** said second portion (42) is made of silicone.

4. Fastening system according to any of previous claims 1-3, **characterized in that** said second portion (42) is pivoted on said first portion.

5. Fastening system according to any of previous claims 1-4, **characterized in that** the rotation of said second portion (42) is prevented by friction with the surface (7) of said glasses and that said first portion (41) is turned by said tool (8).

6. Use of the fastening system according to any of previous claims 1-5 to secure an antitheft device to glasses.

7. Antitheft device for glasses **characterized in that** it comprises the fastening system according to any of claims 1-5.
